(19) Europäisches Patentamt
European Patent Office
Office européen des brevets

(11) **EP 3 513 492 B1**

(12) **EUROPÄISCHE PATENTSCHRIFT**

(45) Veröffentlichungstag und Bekanntmachung des Hinweises auf die Patenterteilung:
**20.09.2023   Patentblatt 2023/38**

(21) Anmeldenummer: **16790289.9**

(22) Anmeldetag: **17.10.2016**

(51) Internationale Patentklassifikation (IPC):
**H02P 6/22** *(2006.01)*        **H02P 6/18** *(2016.01)*

(52) Gemeinsame Patentklassifikation (CPC):
**H02P 6/18; H02P 6/22**

(86) Internationale Anmeldenummer:
**PCT/EP2016/074880**

(87) Internationale Veröffentlichungsnummer:
**WO 2018/072810 (26.04.2018 Gazette 2018/17)**

(54) **VERFAHREN ZUR AUSRICHTUNG EINER DREHSTROMMASCHINE MIT SANFTANLAUF UND DREHSTROMMASCHINE**

METHOD FOR ALIGNING A THREE-PHASE MACHINE HAVING SOFT START AND THREE-PHASE MACHINE

PROCÉDÉ D'ORIENTATION D'UNE MACHINE TRIPHASÉE À DÉMARRAGE PROGRESSIF ET MACHINE TRIPHASÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.07.2019   Patentblatt 2019/30**

(73) Patentinhaber: **Siemens Aktiengesellschaft**
**80333 München (DE)**

(72) Erfinder:
• **NANNEN, Hauke**
  **90443 Nürnberg (DE)**
• **ZATOCIL, Heiko**
  **90469 Nürnberg (DE)**

(74) Vertreter: **Siemens Patent Attorneys**
**Postfach 22 16 34**
**80506 München (DE)**

(56) Entgegenhaltungen:
**WO-A1-2006/034977        DE-A1-102010 008 814**
**DE-A1-102010 030 239        US-A1- 2015 180 377**

**Beschreibung**

Eine Drehstrommaschine wandelt mechanische Energie in Drehstrom oder Drehstrom in mechanische Energie um. Sie kann grundsätzlich als elektrischer Generator oder als Elektromotor betrieben werden. Als Sanftanlauf werden Maßnahmen zur Leistungsbegrenzung beim Einschalten eines elektrischen Gerätes, beispielsweise eines elektrischen Motors, bezeichnet.

Drehstrommaschinen werden gemäß der IEC-Norm 60034 anhand ihres Wirkungsgrades in verschiedene Energieeffizienzklassen eingeteilt. Gerade im unteren Leistungsbereich bis ca. 20kW lassen sich die gesetzlichen Wirkungsgrade für Elektroantriebe nur schwer einhalten, weshalb vermehrt die Verwendung von Permanentmagneten im Rotor angestrebt wird, z.B. als Permanenterregte Synchronmaschine (PMSM).

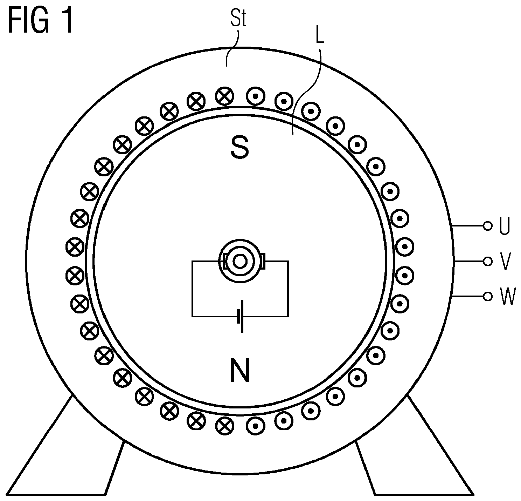

Figur 1 zeigt eine schematische Darstellung einer solchen Permanenterregten Synchronmaschine, in der Ausführung als Innenpolmaschine mit einem Stator St und einem Läufer L. Der Läufer umfasst einen magnetischen Nordpol N und Südpol S und Wicklungssträngen U, V, W. Die Darstellung ist lediglich beispielhaft zu verstehen und hat keine einschränkende Wirkung auf den Schutzbereich des beanspruchten Gegenstands.

Dieser Maschinentyp ermöglicht zwar hohe Energieeffizienzgrade, jedoch sind der Start sowie der Betrieb am starren Netz nicht ohne weiteres möglich.

Um dies zu ermöglichen, kann ein Dämpferkäfig im Läufer der Maschine vorgesehen werden, welcher zwar einen sicheren Hochlauf am starren Netz ermöglicht, jedoch das speisende Netz durch sehr hohe Anlaufströme stark belastet.

Ebenso ist der Betrieb an einem geeigneten leistungselektronischen Stellglied, wie zum Beispiel einem Frequenzumrichter oder Sanftanlauf möglich. Hier stellt insbesondere der Einsatz eines Sanftanlaufs eine kostenfreundliche Lösung zum Hochlauf einer Permanenterregten Synchronmaschine am starren Netz dar. Derzeit ist hierfür jedoch noch keine marktreife Lösung bekannt.

In der Dissertation von Herr Dr. Marcel Bennecke (Universität Magdeburg) mit dem Titel "Anlauf von energieeffizienten Synchronmaschinen mit Drehstromsteller" wird eine Lösung zum Hochlauf der Permanenterregten Synchronmaschine an einem Sanftanlauf vorgestellt. Das in dieser Arbeit vorgestellte Verfahren benötigt jedoch den aktuellen Polradwinkel der Maschine, sodass die für die Arbeit verwendeten Motoren mit einem entsprechenden Gebersystem ausgestattet werden müssen. Unter einem Geber versteht man Drehzahl- und Lagegeber. Diese erfassen, die mechanischen Größen Drehzahl und Lage. Ihre Signale sind erforderlich, um die Regler mit Istwerten zu versorgen und die vorhandenen Lage- und Drehzahlregelkreise zu schließen. Für die vektoriellen Regelverfahren bei Drehstromantrieben dienen die Lage- und Drehzahlsignale auch als wichtige Eingangsgröße für den Stromregelkreis. Der Geber erfaßt in diesem Fall die Drehzahl und/oder Lage unmittelbar an der Motorwelle.

Aus der DE 10 2010 008 814 A1 vom selben Autor ist ebenfalls ein Verfahren zum Betrieb von Synchronmotoren mit einem dreiphasigen Drehstromsteller an einem Drehstromnetz bekannt. Auch bei dem beschriebenen Verfahren wird ein Lagegeber zur Ermittlung des Lagewinkels des Rotors verwendet.

Das Gebersystem wirkt sich allerdings negativ auf die Kosten und die Verfügbarkeit des Systems aus, was derzeit eine Sanftanauflösung für hocheffiziente Motoren unattraktiv macht.

Aus der DE 10 2010 030 239 A1 ist bereits ein Verfahren zum Anlassen eines Elektromotors bei unbekannter Anfangsposition des Rotors bekannt. Der Rotor wird dabei zuerst in eine definierte Ausgangsposition verfahren um von dort aus mit einem optimalen Anlaufprofil hochzufahren. Dies geschieht durch Antreiben des Rotors mit einem ersten Drehmoment in eine erste Drehrichtung und dann ausgehend von der ersten Stillstandsposition ein Antreiben des Rotors in die entgegengesetzte Richtung, bis der Rotor in einer vorbestimmten zweiten Position zum Stillstand kommt.

Aus der WO 2006/034977 A1 ist ein Verfahren bekannt, bei dem sich der steuernde Mikrocontroller die für den Anlauf notwendigen Einstellungen von Parametern des Sanftstarters selber ermittelt.

Es ist Aufgabe der Erfindung, ein Verfahren zum Hochlauf einer Permanenterregten Synchronmaschine ohne Geber anzugeben. Es ist weiterhin Aufgabe der Erfindung, eine Permanenterregten Synchronmaschine ohne Geber anzugeben, welche mit dem erfindungsgemäßen Verfahren arbeitet.

Die Aufgabe wird gelöst durch ein Verfahren gemäß den Merkmalen des unabhängigen Anspruchs 1. Die Aufgabe wird weiterhin gelöst durch eine Drehstrommaschine gemäß den Merkmalen des unabhängigen Patentanspruchs 3.

Das benötigte Startverfahren unterscheidet sich zu den im Stand der Technik bekannten geberlosen Verfahren dahingehend, dass es für einen Thyristorsteller und nicht einen Frequenzumrichter verwendbar sein muss. Somit sind diese bekannten Verfahren nicht anwendbar.

Die Problematik des geberlosen Hochlaufs kann in zwei Teilprobleme zerlegt werden: Bestimmung des initialen Rotorwinkels und Hochlauf der Maschine.

Die Erfindung wird auch durch die folgenden Figuren dargestellt:

Figur 1 zeigt einen Schnitt durch eine beispielhafte Drehstrom-Maschine,

Figur 2 ein Diagramm der Stromrichtung mit diskreten Stromraumzeigern,
Figur 3 zeigt einen simulierten Stromverlauf in Phase U und
Figur 4 zeigt einen beispielhaften Verlauf des elektrischen Winkels während des Ausrichtvorgangs bei unterschiedlichen Startwinkeln.

Das beanspruchte Verfahren zeigt, wie die initiale Rotorposition festgelegt werden kann, sodass ein Hochlauf
ohne Geber möglich ist.

Im initialen Zustand des Systems ist die elektrische Lage der Maschine unbekannt und muss ermittelt bzw.
festgelegt werden. Hierzu wird die Maschine mit pulsenden Strömen in definierter Richtung beaufschlagt und durch
diese in eindeutiger Richtung ausgerichtet. Ebenso wird der Stromverlauf analysiert, sodass ermittelt werden kann, ob
sich die Maschine überhaupt bewegt. Im Folgenden werden die einzelnen Schritte genauer erläutert.

Während des gesamten Ablaufs werden immer lediglich zwei Ventile, bestehend aus zwei antiparallelen Thyristoren, gezündet, sodass nur zwei Motorphasen stromdurchflossen sind. Die dritte Phase führt keinen Strom, da das
entsprechende Ventil sperrt. Folgerichtig gilt für diesen Zustand, dass die beiden stromdurchflossenen Phasen dem
Betrage nach denselben Strom führen, jedoch mit unterschiedlichen Vorzeichen. Dies hat zur Folge, dass der Stromraumzeiger im ständerfesten Koordinatensystem lediglich auf drei festen Achsen verlaufen kann und die Stromraumzeigerlänge sich zeitabhängig ändert.

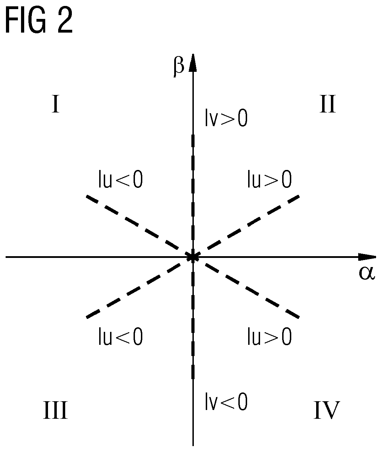

Berücksichtigt man die Stromrichtung, sind insgesamt 6 diskrete Stromraumzeiger möglich, siehe Figur 2.

In Quadrant I sind die Phasen V und W gezündet, in Quadrant II die Phasen U und W, und in Quadrant IV die
Phasen U und V.

Durch den Stromfluss in eine der sechs möglichen Richtungen wird ein ebenso ausgerichtetes Feld in der
Maschine aufgebaut. Ist die Flussachse der Maschine nicht in dieser durch den Strom determinierten Richtung, entsteht
ein Drehmoment und die Maschine beginnt sich in Richtung des Ständerstromraumzeigers zu drehen - sie richtet sich
also von alleine in Stromrichtung aus. Sobald die Flussachse der Maschine mit der Stromrichtung zusammenfällt, entsteht
kein Drehmoment mehr.

Ermittlung des optimalen Zündwinkels:
Um sicherzustellen, dass die Ausrichtung der Maschine mit einem festgelegten Maximalstrom (und damit auch mit einem
maximalen Drehmoment) durchgeführt wird, muss zunächst der optimale Zündwinkel ermittelt werden. Dieser wird bei
allen weiteren Ausrichtvorgängen verwendet.

Hierfür werden zwei Thyristoren bei einem sehr großen Zündwinkel (z.B. 180°) lediglich einmalig gezündet und
der Amplitudenwert der Phasenströme ermittelt. Durch den großen Zündwinkel sind die an der Maschine wirksame
Spannungszeitfläche und damit das Maximum des resultierenden Stroms sehr gering. Ist die Stromamplitude geringer
als ein definierter Maximalwert, wird der Zündwinkel des Thyristorstellers langsam von z.B. 180° verringert und der
Stromamplitudenwert wieder mit dem Maximalwert verglichen.

Dieser Vorgang wird so lange wiederholt, bis der Amplitudenwert ausreichend nahe am Maximalwert liegt.

Bei allen weiteren Messungen muss der Amplitudenwert der Ströme kontinuierlich überwacht und gegebenenfalls der optimale Zündwinkel nochmals angepasst werden. Vereinfachend wird im Weiteren vorausgesetzt, dass dies
nicht nötig ist.

Eine Berechnung kann dabei wie folgt aussehen:
Phase U und V werden gezündet und der Strom in Phase U ist positiv. So ist der Winkel im Vektor -30°.

Bei Anwendung der Clarke/Park Transformation mit dem elektrischen Winkel der Maschine $\varphi$ kann der den
Drehmoment bildende Strom $I_q$ berechnet werden:

$$I_q(t) = \frac{2}{3} \cdot \left[ -I_U(t) \cdot \sin\varphi - I_V(t) \cdot \sin\left(\varphi - \frac{2\pi}{3}\right) - I_W(t) \cdot \sin\left(\varphi + \frac{2\pi}{3}\right) \right]$$
$$= -\frac{2}{\sqrt{3}} \cdot I_U(t) \cdot \cos\left(-\varphi + \frac{\pi}{3}\right)$$

Folglich wird der Drehmoment berechnet als ($L_d = L_q$) :

$$M(t) = \frac{2}{3} \cdot p \cdot \psi_d \cdot I_q(t)$$
$$= -\frac{4}{3 \cdot \sqrt{3}} \cdot p \cdot \psi_d \cdot I_U(t) \cdot \cos\left(-\varphi + \frac{\pi}{3}\right)$$

Der Drehmoment wird 0 wenn der elektrische Winkel = -30° ist.

Erste Ausrichtung:
Während der Ermittlung des optimalen Zündwinkels hat sich die Maschine aufgrund der pulsierenden Ströme bereits ausrichten können. Es ist jedoch hiermit noch nicht sichergestellt, dass die Maschine bereits vollständig ausgerichtet ist. Aus diesem Grund werden die Thyristoren noch mehrmals (die Anzahl ist kalibrierbar) mit dem ermittelten optimalen Zündwinkel gezündet, sodass am Ende davon ausgegangen werden kann, dass sich die Maschine nicht mehr bewegt und somit ausgerichtet ist. Abschließend wird der Verlauf des Stromraumzeigers während eines Zündvorgangs aufgezeichnet und bei den nachfolgenden Messungen als Referenzverlauf verwendet.

Zweite Ausrichtung (Plausibilisierung):
Nach der ersten Ausrichtung muss sichergestellt werden, dass sich die Maschine zum einen tatsächlich frei bewegen kann und zum anderen wirklich in Stromrichtung und nicht um genau 180° versetzt ausgerichtet ist. Hierfür wird das oben beschriebene Verfahren mit demselben optimalen Zündwinkel, jedoch in einer anderen Stromrichtung wiederholt.

Wurden also bisher beispielsweise immer die Phasen U und V gezündet, werden nun die Phasen V und W gezündet. Hierbei kann man die Phasenfolge so wählen, dass der Motor in positiver Drehrichtung dreht und es nicht zu einem eventuellen Schaden an der Mechanik kommt, da diese sich während der Ausrichtung entgegengesetzt der erlaubten Drehrichtung dreht.

Während nun die Maschine mit einem pulsierenden Stromraumzeiger in anderer Richtung beaufschlagt wird, wird der gemessene Verlauf des Ständerstromraumzeigers mit dem Referenzverlauf aus der ersten Ausrichtung verglichen. Sind die Verläufe sehr ähnlich, bewegt sich der Motor nicht und eine entsprechende Meldung ("Motor blockiert") wird ausgegeben - der Ausrichtvorgang kann nicht abgeschlossen werden und deshalb zum Schutz des Systems abgebrochen.

Richtet sich die Maschine entsprechend des neuen Winkels des Stromraumzeigers neu aus, sind die Stromverläufe unterschiedlich. Nun werden dieselben Thyristoren wieder mehrmals gezündet, um die Maschine endgültig auszurichten. Am Ende dieses Vorgangs wird der Verlauf des Ständerstromraumzeigers wieder mit dem Referenzverlauf verglichen. Sind die Verläufe sehr ähnlich, bewegt sich die Maschine nicht mehr und die Maschine ist ausgerichtet.

Differieren die Verläufe nach wie vor markant, kann das Verfahren wiederholt werden oder es wird ein Fehler gemeldet, um die Maschine vor mechanischer Beschädigung zu schützen.

Stromverlauf (simuliert):

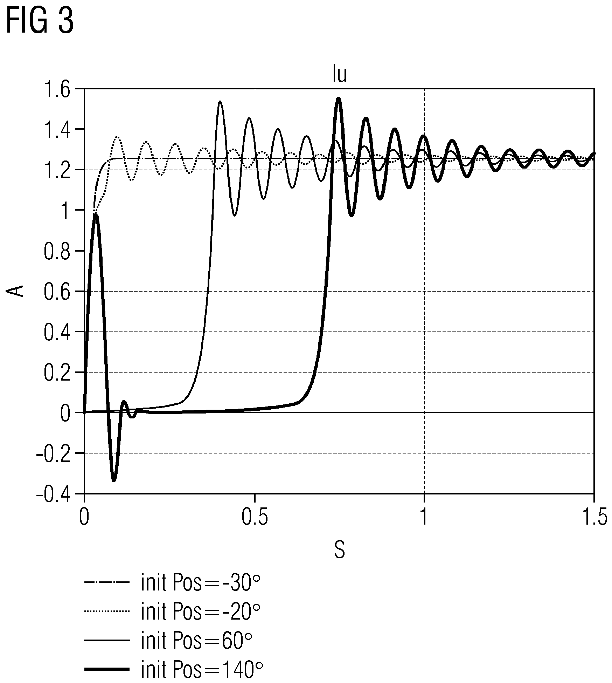

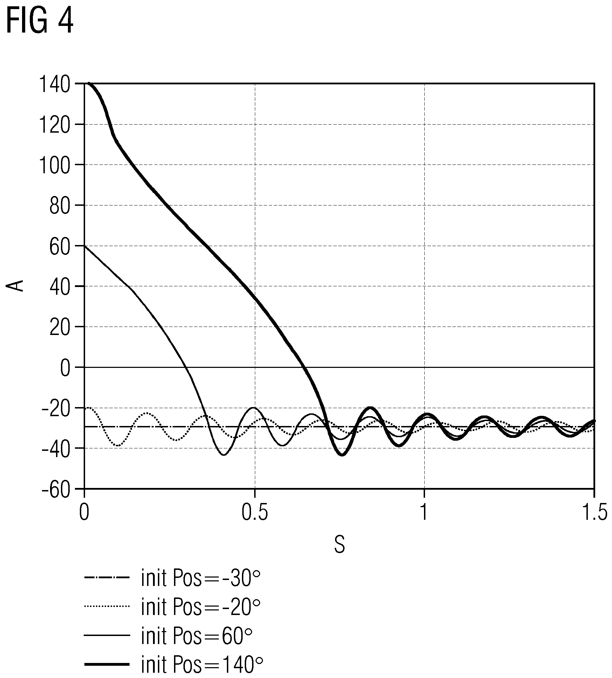

Die Figuren 3 und 4 zeigen beispielhaft den simulierten Verlauf des Phasenstroms in Phase U sowie den Verlauf des elektrischen Winkels während des Ausrichtvorgangs bei unterschiedlichen Startwinkeln.

In der Simulation wurde die Maschine vereinfachend mit einer DC-Spannung beaufschlagt, jedoch sind die grundlegenden Aussagen auch auf die Anregung mit einem Thyristorsteller gültig.

Es wird deutlich, dass bei einem Startwinkel von $\varphi = -30°$ die Maschine bereits ausgerichtet ist und der Stromverlauf alleine durch den Widerstand und die Induktivität der Maschine determiniert wird (RL-Strecke). Mit steigendem Initialwinkel der Maschine weicht der Stromverlauf markant von diesem einfachen RL-Verhalten ab. Die Ursache hierfür sind die durch die Bewegung der Maschine induzierten Spannungen, welche die Stromform beeinflussen - der Verlauf des Stromes kann also zur Plausibilisierung ("bewegt sich die Maschine?") herangezogen werden.

Zwei Indikatoren für eine erfolgreiche Ausrichtung können beispielsweise eingeführt werden durch die Berechnung

$$\sum \left[ I_U^{\varphi_{1n}}(k) - I_U^{\varphi_{21}}(k) \right]^2 > \varepsilon_{block} \quad and \quad \sum \left[ I_U^{\varphi_{1n}}(k) - I_U^{\varphi_{2n}}(k) \right]^2 \leq \varepsilon_{finish}$$

und Vergleich zu einem Schwellwert $\varepsilon$.

Stromverlauf (gemessen):
Der simulierte Stromverlauf bei DC-Bestromung wurde an einer realen Maschine im Labor verifiziert. Die Startwinkel wurden grob mit folgenden Werten abgeschätzt:

| Kanal | Elektrischer Startwinkel in ° |
|---|---|
| R1 | 0 |
| R2 | -45 |
| R3 | -85 |
| R4 | -125 |
| CH1 | -175 |

Das beschriebene Startverfahren unterscheidet sich zu den bekannten geberlosen Verfahren dahingehend, dass es für einen Thyristorsteller und nicht einen Frequenzumrichter verwendbar sein muss. Dies hat direkt zur Folge, dass ein Verfahren mit Testsignalaufschaltung bei geringen Drehzahlen aufgrund der Hardware-Topologie nicht realisierbar ist - die bekannten Verfahren sind nicht auf den vorliegenden Anwendungsfall übertragbar.

**Patentansprüche**

1. Verfahren zur Ausrichtung einer Drehstrommaschine mit einem Thyristorsteller, mit drei Motorphasen (U, V, W) und mit Sanftanlauf, wobei bei jedem Schritt des Verfahrens nur zwei Ventile, bestehend aus zwei antiparallelen Thyristoren, gezündet werden, sodass nur zwei Motorphasen (U, V, W) der Drehstrommaschine stromdurchflossen sind, mit folgenden Schritten:

   in einem ersten Schritt eine erste Ausrichtung des Läufers durchgeführt wird, indem ein optimaler Zündwinkel ermittelt wird, indem zwei Zündungen mit sehr großem Zündwinkel einmal gezündet werden, wobei der sehr große Zündwinkel dadurch bestimmt ist, dass der Amplitudenwert des Stroms geringer ist als ein definierter Maximalwert, und der Amplitudenwert der Phasenströme ermittelt wird, zur Ermittlung des optimalen Zündwinkels zumindest eine weitere Zündung durchgeführt wird, solange bis der gemessene Amplitudenwert ausreichend nahe an dem Maximalwert liegt, und
   in einem zweiten Schritt eine weitere Ausrichtung erfolgt
   unter Verwendung des ermittelten optimalen Zündwinkels, **dadurch gekennzeichnet, dass**
   in einem dritten Schritt eine Plausibilisierung der Ausrichtung des Läufers durchgeführt wird, indem ein Verlauf des Stromraumanzeigers während eines Zündvorganges aufgezeichnet und bei den nachfolgenden Messungen als Referenzverlauf verwendet wird, und
   der Läufer mit dem zuvor ermittelten optimalen Zündwinkel in einer
   zweiten Stromrichtung beaufschlagt wird, und
   der gemessene Verlauf des Stromraumanzeigers der zweiten Stromrichtung mit dem zuvor aufgezeichneten Referenzverlauf basierend auf der ersten Stromrichtung verglichen wird und bei einer Übereinstimmung eine Fehlermeldung ausgegeben wird.

2. Verfahren gemäß Patentanspruch 1,
   **dadurch gekennzeichnet, dass**

   die erste stromdurchflossene Motorphase (U, V, W) dem Betrage nach die gleiche Strommenge führt wie die zweite stromdurchflossene Stromphase (U, V, W), und
   die erste stromdurchflossene Stromphase (U, V, W) der Richtung nach ein anderes Vorzeichen aufweist als die zweite stromdurchflossene Stromphase (U, V, W).

3. Drehstrommaschine, mit einem Thyristorsteller, mit drei Motorphasen (U, V, W) und mit Sanftanlauf,

   wobei jeweils nur zwei Ventile, mit zwei antiparallelen Thyristoren, gezündet werden, sodass nur zwei Motorphasen (U, V, W) der Drehstrommaschine stromdurchflossen sind, wobei der Läufer ausrichtbar ist, indem in einem ersten Schritt ein optimaler Zündwinkel ermittelbar ist, indem zwei Zündungen mit sehr großem Zündwinkel einmal gezündet werden, wobei der sehr große Zündwinkel dadurch bestimmbar ist, wenn der Amplitudenwert des Stroms geringer ist als ein definierter Maximalwert, und der Amplitudenwert der Phasenströme ermittelbar ist, und dieser Vorgang so lange wiederholt wird, bis der Amplitudenwert ausreichend nahe an dem Maximalwert liegt,
   in einem zweiten Schritt eine weitere Ausrichtung erfolgt unter Verwendung des ermittelten optimalen Zündwinkels, **dadurch gekennzeichnet, dass** die Ausrichtung des Läufers plausibilisierbar ist, indem ein Verlauf des Stromraumanzeigers während eines Zündvorganges aufgezeichnet und bei den nachfolgenden Messungen als Referenzverlauf verwendet wird,
   der Läufer mit dem zuvor ermittelten optimalen Zündwinkel in einer zweiten Stromrichtung beaufschlagbar wird, und
   der gemessene Verlauf des Stromraumanzeigers der zweiten Stromrichtung mit dem zuvor aufgezeichneten Referenzverlauf basierend auf der ersten Stromrichtung verglichen wird und bei einer Übereinstimmung eine Fehlermeldung ausgegeben wird.

**EP 3 513 492 B1**

**Claims**

**1.** Method for aligning a three-phase machine with a thyristor controller, with three motor phases (U, V, W) and with soft starting, wherein, in each step of the method, only two valves, consisting of two thyristors connected back-to-back in parallel, are fired, with the result that current flows through only two motor phases (U, V, W) of the three-phase machine,
comprising the following steps:

in a first step, a first alignment of the rotor is performed by virtue of an optimum firing angle being ascertained by virtue of two firing operations being triggered once with a very large firing angle, wherein the very large firing angle is determined by the amplitude value of the current being lower than a defined maximum value, and the amplitude value of the phase currents is ascertained, and, to determine the optimum firing angle, at least one further firing operation is performed until the measured amplitude value is sufficiently close to the maximum value, and
in a second step, a further alignment takes place using the ascertained optimum firing angle,
**characterized in that**
in a third step, a plausibility check is performed on the alignment of the rotor by virtue of a characteristic of the current space vector during a firing operation being recorded and being used as reference characteristic in the subsequent measurements, and the previously ascertained optimum firing angle is applied to the rotor in a second current direction, and
the measured characteristic of the current space vector in the second current direction is compared with the previously recorded reference characteristic on the basis of the first current direction, and in the event of a correspondence, an error message is output.

**2.** Method according to Patent Claim 1,
**characterized in that**

the first motor phase (U, V, W) through which current flows conducts, in terms of absolute value, the same quantity of current as the second current phase (U, V, W) through which current flows, and
the first current phase (U, V, W) through which current flows has, in terms of direction, a different mathematical sign than the second current phase (U, V, W) through which current flows.

**3.** Three-phase machine with a thyristor controller, with three motor phases (U, V, W) and with soft starting, wherein, in each case, only two valves, consisting of two thyristors connected back-to-back in parallel, are fired, with the result that current flows through only two motor phases (U, V, W) of the three-phase machine, wherein the rotor is able to be aligned, in a first step, by virtue of an optimum firing angle being able to be ascertained by virtue of two firing operations being triggered once with a very large firing angle, wherein the very large firing angle is able to be determined if the amplitude value of the current is lower than a defined maximum value, and the amplitude value of the phase currents is able to be ascertained, and this operation is repeated until the amplitude value is sufficiently close to the maximum value,

in a second step, a further alignment takes place using the ascertained optimum firing angle,
**characterized in that**
a plausibility check is able to be performed on the alignment of the rotor by virtue of a characteristic of the current space vector during a firing operation being recorded and being used as reference characteristic in the subsequent measurements,
the previously ascertained optimum firing angle is able to be applied to the rotor in a second current direction, and
the measured characteristic of the current space vector in the second current direction is compared with the previously recorded reference characteristic on the basis of the first current direction, and in the event of a correspondence, an error message is output.

**Revendications**

**1.** Procédé destiné à l'orientation d'une machine triphasée avec un régulateur à thyristors, avec trois phases de moteur (U, V, W) et avec un démarrage progressif, dans lequel lors de chaque étape du procédé seules deux soupapes, se composant de deux thyristors antiparallèles, sont amorcées, de sorte que seules deux phases de moteur (U, V, W) de la machine triphasée sont parcourues par un courant,

6

avec les étapes suivantes :

lors d'une première étape une première orientation du curseur est menée à bien en ce qu'un angle d'amorçage optimal est déterminé, en ce que deux amorçages sont amorcés une seule fois avec un très grand angle d'amorçage, dans lequel le très grand angle d'amorçage est déterminé en ce que la valeur d'amplitude du courant est plus faible qu'une valeur maximale définie, et la valeur d'amplitude des courants de phase est déterminée, pour la détermination de l'angle d'amorçage optimal au moins un autre amorçage est mené à bien, tant que la valeur d'amplitude mesurée est suffisamment proche de la valeur maximale, et

lors d'une deuxième étape une orientation supplémentaire est effectuée en utilisant l'angle d'amorçage optimal déterminé,

**caractérisé en ce que**

lors d'une troisième étape une plausibilisation de l'orientation du curseur est menée à bien **en ce qu'**un parcours du vecteur spatial de courant est enregistré pendant un processus d'amorçage et est utilisé lors des mesures suivantes en tant que parcours de référence, et le curseur est sollicité avec l'angle d'amorçage optimal déterminé préalablement dans une deuxième direction de courant, et

le parcours mesuré du vecteur spatial de courant de la deuxième direction de courant est comparé au parcours de référence enregistré préalablement sur la base de la première direction de courant et un message d'erreur est émis lors d'une concordance.

2. Procédé selon la revendication 1,
**caractérisé en ce que**
la première phase de moteur parcourue par un courant (U, V, W) conduit à des montants de la même quantité de courant que la seconde phase de courant parcourue par un courant (U, V, W), et la première phase de courant parcourue par un courant (U, V, W) de la direction présente un autre signe algébrique que la seconde phase de courant parcourue par un courant (U, V, W).

3. Machine triphasée, avec un régulateur à thyristors, avec trois phases de moteur (U, V, W) et avec un démarrage progressif, dans laquelle respectivement seules deux soupapes, avec deux thyristors antiparallèles, sont amorcées, de sorte que seules deux phases de moteur (U, V, W) de la machine triphasée sont parcourues par un courant, dans laquelle le curseur est orientable en ce qu'un angle d'amorçage optimal peut être déterminé lors d'une première étape, en ce que deux amorçages sont amorcés une seule fois avec un très grand angle d'amorçage, dans laquelle le très grand angle d'amorçage peut être déterminé en ce que lorsque la valeur d'amplitude du courant est plus faible qu'une valeur maximale définie, et la valeur d'amplitude des courants de phase peut être déterminée, et ce processus est répété jusqu'à ce que la valeur d'amplitude soit suffisamment proche de la valeur maximale, lors d'une deuxième étape une autre orientation est effectuée en utilisant l'angle d'amorçage optimal déterminé, **caractérisée en ce que**

l'orientation du curseur peut être rendue plausible **en ce qu'**un parcours du vecteur d'espace de courant est enregistré pendant un processus d'amorçage et est utilisé en tant que parcours de référence lors des mesures suivantes,

le curseur est sollicité dans une seconde direction de courant avec l'angle d'allumage optimal déterminé précédemment,

et

le parcours mesuré du vecteur d'espace de courant de la seconde direction de courant est comparé avec le parcours de référence enregistré préalablement sur la base de la première direction de courant et un message d'erreur est émis lors d'une concordance.

FIG 1

St

L

S

U

V

W

N

FIG 2

# FIG 3

FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010008814 A1
- DE 102010030239 A1

- WO 2006034977 A1